(19) Europäisches Patentamt / European Patent Office / Office européen des brevets

(11) **EP 2 063 257 A2**

(12) **EUROPEAN PATENT APPLICATION**

(43) Date of publication:
**27.05.2009 Bulletin 2009/22**

(51) Int Cl.:
**G01N 21/64** (2006.01)

(21) Application number: **08002686.7**

(22) Date of filing: **13.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **22.11.2007 US 989828 P**

(71) Applicant: **Johannes Kepler Universität Linz 4040 Linz (AT)**

(72) Inventors:
• **Hesch, Clemens 4020 Linz (AT)**
• **Schuetz, Gerhard J. 4030 Linz (AT)**
• **Hesse, Jan 4020 Linz (AT)**

(74) Representative: **Dilg, Andreas Dilg, Haeusler, Schindelmann (DHS) Patentanwaltsgesellschaft mbH Leonrodstrasse 58 80636 München (DE)**

(54) **Single particle detection by using alternating excitation schemes**

(57) An apparatus for single particle detection, the apparatus comprising a readout unit adapted to use alternating excitation schemes, an illumination unit adapted to illuminate a sample, and a scanning unit adapted to scan two images of the sample, in particular of the same region of the sample, wherein the two images are quasi-simultaneously recorded images.

Fig. 2

**Description**

This application claims the benefit of the filing date of United States Provisional Patent Application No. 60/989,828 filed November 22, 2007, the disclosure of which is hereby incorporated herein by reference.

The invention relates to an apparatus for single particle detection.

Moreover, the invention relates to a method of detecting single particles.

Beyond this, the invention relates to a program element.

The invention further relates to a computer-readable medium.

Furthermore, the invention relates to a method of use.

In recent years chip technology has become the prevalent method for large-scale characterization of biological samples (Mir, 2006, Heller, 2002, Huh et al., 2003, Sauter et al., 2003, Teruel and Meyer, 2002, Zhu et al., 2003). More and more researchers have been using this tool in combination with live cell imaging to obtain mechanistic insights into biomolecular function under native conditions (Huh et al., 2003, Teruel and Meyer, 2002). In particular, knowledge about expression and subcellular localization of fluorescent proteins allows for a comprehensive description of cellular signaling and sorting mechanisms, down to the level of single molecules (Huh et al., 2003, Teruel and Meyer, 2002, Heise et al., 2005, Cai et al., 2006, Yu et al., 2006).

It turned out that cell biology imposes multiple constraints on the detection schemes. For unambiguous discrimination of the fluorescent species from cellular autofluorescence or even more so for multicomponent analysis a multi-color approach is adequate (Moertelmaier et al., 2002). Yet, the broad dye emission spectra limit the number of distinct detection channels. Researchers addressed this limitation by reverting to alternating excitation schemes for additional spectral information. Sort decisions in flow cytometry for instance typically rely on the cross-correlation of events recorded at different excitation wavelengths; there, separated optical pathways are used for each excitation color. In confocal single molecule spectroscopy, alternating excitation schemes have been implemented by toggling multiple excitation channels in time (Kapanidis et al., 2004, Muller et al., 2005, Lee et al., 2007, Kapanidis et al., 2006, Ross et al., 2007). That approach proved particularly advantageous for Förster Resonant Energy Transfer (FRET) analysis by adding information on the acceptor state and stoichiometry. Application to live cell imaging, however, appears difficult due to the serial nature of confocal detection. A second constraint is set by intracellular dynamics of the observed species such as organelle transport, molecular movements, activation waves, or processing of molecules. Preferentially, the fluorescent substance should remain unaltered between the two-color recordings, rendering sequential image acquisition methods impractical. In particular, a repetition time $\tau < \delta/_v$ is required to virtually "freeze" an object moving at speed v using a detection system with resolution $\delta$, and analogously $\tau < \delta^2/_{4D}$ for a laterally diffusing object with diffusion constant D. Assuming diffraction-limited imaging, a time resolution of 20ms was estimated to be sufficient for quasi-simultaneous two-color recording of a transported vesicle (v =10$\mu$m/s (Kural et al., 2005)) or a single protein molecule (D=0.5$\mu$m$^2$/s (Kenworthy et al., 2004, Wieser et al., 2007)).

However, conventional systems may lack sufficient resolution in space and time for specific applications such as single particle detection.

It is an object of the invention to provide a particle detection system having a sufficient resolution.

In order to achieve the object defined above, an apparatus for single particle detection, a method of detecting single particles, a program element, a computer-readable medium and a method of use according to the independent claims are provided.

According to an exemplary embodiment of the invention, an apparatus for single particle detection is provided, the apparatus comprising a readout unit (which can be an entity which is capable of reading out data required for acquiring information indicative of the presence/absence of the particles or even indicative of the amount or quantity of such particles), wherein the readout unit is adapted to use alternating excitation schemes.

According to another exemplary embodiment of the invention, a method of detecting single particles is provided, the method comprising using alternating excitation schemes for reading out a result of the detection (particularly, the alternating excitation scheme need not only be used for reading out results, but also for the detection or measurement phase).

According to yet another exemplary embodiment of the invention, an apparatus having the above mentioned features is used for life cell imaging.

According to still another exemplary embodiment of the invention, a program element (for instance a software routine, in source code or in executable code) is provided, which, when being executed by a processor (such as a microprocessor or a CPU), is adapted to control or carry out a method having the above mentioned features.

According to yet another exemplary embodiment of the invention, a computer-readable medium (for instance a CD, a DVD, a USB stick, a floppy disk or a harddisk) is provided, in which a computer program is stored which, when being executed by a processor (such as a microprocessor or a CPU), is adapted to control or carry out a method having the above mentioned features.

Data processing which may be performed according to embodiments of the invention can be realized by a computer program, that is by software, or by using one or more special electronic optimization circuits, that is in hardware, or in hybrid form, that is by means of software components and hardware components.

The term "particles" may particularly denote any biological particles which play a significant role in biology or in biological or biochemical procedures, such as DNA, RNA, proteins, enzymes, cells, bacteria, virus, etc. Particularly, embodiments of the invention may detect fluorescence marked particles, for instance particles having a fluorescence marker or label attached thereto. In another embodiment of the invention, pairs of fluorescence markers may be linked to a molecule of interest in such a way that FRET (Förster resonance energy transfer) can occur, thereby providing information on the conformation of the molecule of interest.

The term "sample" may particularly denote any subset of the phases of matter, including fluids. Such fluids may include liquids, gases, plasmas and, to some extent, solids, as well as mixtures thereof. Examples for fluidic samples are DNA containing fluids, blood, interstitial fluid, muscle or brain tissue, urine or other body fluids.

The term "illumination unit" or "electromagnetic radiation source" may particularly denote a device capable of generating electromagnetic radiation (particularly a continuous or pulsed beam of essentially monochromatic or polychromatic radiation).

The term "electromagnetic radiation" may particularly denote photons of an appropriate wavelength. Although embodiments of the invention are based on an optical irradiation with photons in a wavelength range of approximately 400 nm to approximately 800 nm, other embodiments of the invention may also use infrared, UV, or even X-rays.

The term "detector unit" or "electromagnetic radiation detector" may denote any device capable of detecting electromagnetic radiation in a specific wavelength range in a qualitative or quantitative manner. Particularly, the electromagnetic radiation detector may be a camera, a charge coupled device (CCD), a CMOS detector, or may be a photodiode or an array of photodiodes.

The term "carrier" may particularly denote a component which is specifically designed to receive a solid substrate such as a sample holder or sensor chip, for instance a biochip. In certain embodiments, the carrier is made from a light-transmitting material, such as glass, quartz, or transparent synthetic polymeric materials such as polyethylene, polypropylene and polyphenylene sulfide.

The term "biosensor chip" may particularly denote any device which may be used for the detection of a component of an analyte comprising biological materials such as DNA, RNA, proteins, enzymes, cells, bacteria, virus, etc.

According to an exemplary embodiment of the invention, particles such as molecules or cells may be detected individually by exciting for instance fluorescent portions of such particles alternatingly with two or more different excitation triggers such as wavelength of two different values, thereby allowing to distinguish different fluorescence characteristics (additionally or alternatively, a discrimination regarding other criteria is possible, for instance a discrimination regarding polarization and/or intensity) or aspects of such molecules. The alternation between the two excitation modes may be so fast in time that the corresponding image data acquired almost simultaneously in two different color channels may allow for a direct comparability of the two pieces of information. By taking this measure, it may be possible to increase the resolution in the time domain and in space to such an extent that single particle analysis may be made possible.

With regard to alternating excitation schemes, a brightness variation may result in an increase in the dynamic range, and a polarization variation may result in information about the in-plane dipole orientation.

According to an exemplary embodiment of the invention, it may be possible to measure specimen of relatively large or even basically unlimited size by performing a relative motion between the sample on the one hand and a detector and an illumination source on the other hand. By implementing a combination of a quasi-simultaneous illumination and detection of the sample in two different measurement channels (which may differ regarding the illumination wavelength, polarization or intensity, etc.), single-molecule identification or monitoring may become possible.

According to an embodiment, a camera-based scan system may be provided which switchingly alternates excitation wavelength sufficiently fast in order to be simultaneous or quasi simultaneous on the millisecond scale, i.e. on a time scale which is short compared to a typical motion characteristic of many biological systems. Thus, a device for single particle readout of biochips using alternating excitation modes may be operated using synchronized sample illumination, scanning and readout using a camera delivering two or more quasi-simultaneous images which cover the same or a similar portion of the sample. This may allow the mapping even of a moving object using two or more color excitation. Hence, a method for quasi-simultaneous scanning in two or more color channels of biochips with single molecule sensitivity may be provided. By the quasi-simultaneous operation (i.e. delay or interval between two images at the same position in two different channels of several microseconds) it may be possible to investigate molecular motions and interactions in, for instance, living cells. Embodiments of the invention allow for the separate excitation of different dyes or fluorescent portions or labels of the sample, particularly a precise analysis of molecular interactions by FRET (Förster Resonance Energy Transfer). This may also allow to implement methods such as acceptor photo bleaching on scanners.

The above mentioned difficulties are solved by embodiments of the invention by devising a camera-based scanning system, which alternates excitation wavelengths rapidly enough to be locally quasi-simultaneous on the milliseconds time-scale. This may allow for an implementation of alternating excitation schemes in a biochip-reader for quasi-simultaneous multi-color single-molecule detection.

According to an exemplary embodiment, a device for single-molecule biochip readout using alternating excitation schemes is provided. Synchronized sample illumination, scanning and read-out on a line-camera yield two quasi-simultaneously recorded images covering the same sample region which may result in diffraction-limited resolution, ultrasensitivity and high localization precision of the method. Its applicability to two-color excitation imaging of moving objects is advantageous and has been demonstrated by studying single fluorescent streptavidin molecules diffusing in a fluid lipid bilayer and by live-cell imaging.

Next, further exemplary embodiments of the apparatus will be explained. However, these embodiments also apply to the method of detecting single particles, to the program element, to the computer-readable medium and to the method of use.

The apparatus may further comprise an illumination unit (for instance one or more lasers or other basically monochromatic illumination sources) and a scanning unit (for instance an xy table allowing for a two-dimensional motion within a plane), wherein the illumination unit may be adapted to illuminate a sample (which may comprise a particle to be detected), and the scanning unit may be adapted to scan two images of the sample, for instance of the same or a similar region of the sample. It is possible that one or more regions on the sample can be scanned, and for each of the one or more regions, two or more measurement channels may be captured (for instance two or more color channels). The cooperation of illumination unit, scanning unit and readout unit (which may be a control unit such as a CPU (central processing unit), a microprocessor or the like) may therefore allow to illuminate a sample with alternating illumination schemes for excitation of the sample for example in different wavelength regimes, thereby allowing to scan a part of or the entire surface of the fluidic sample by moving the scanning unit relative to the illumination unit.

The two images may be quasi-simultaneously recorded images. For example, a time distance between capturing the two images may be in the order of magnitude of less than about 10 ms, particularly of less than about 3 ms. Therefore, a time distance between two subsequent images may be adjusted to, on a biological scale, allow that the molecules are "quasi-frozen", allowing to directly compare the images and to derive information about structure and dynamics of the detected particle or particles. It should be mentioned that the simultaneous capturing of the images (or image data) may be simultaneous on a local scale. In other words, the time distance of, for instance, milliseconds may be related to pixel rows in the different color channels rather than on the entire images. The entire image are then formed only at the end of the scanning procedure when the "interweaved" image data of the individual channels are extracted from the entire data file. For instance, it is possible that the scan takes hours, although the individual images may be generated quasi-simultaneously.

The readout unit may be adapted to control the illumination unit to alternatingly excite the sample by irradiating the sample alternatingly with electromagnetic radiation pulses of two or more different wavelengths. For example, one wavelength may be activated while the other wavelength is deactivated, and vice versa. Gaps may be foreseen in such an illumination sequence in which gaps none of the wavelenghts are active so that no illumination occurs in such gaps. During at least a part of the illumination time of one of the respective wavelengths, a camera may capture a corresponding image, thereby alternatingly capturing images for two different colors. The image capturing time intervals of the camera may be shorter than the illumination intervals of the illumination source(s) or vice versa.

The different wavelengths may differ by more than 100 nm, particularly when the wavelengths are in the visible range. However, in other applications, it is also possible that the wavelengths only differ by several ten nanometers. Therefore, with such a distance, different portions of the sample under investigation having different fluorescence properties may be sampled, thereby allowing to derive a broad basis of complementary data.

The different wavelengths may be in the visible light range. For instance, the wavelengths may be red light (for instance having a wavelength of between 590 nm and 750 nm) and green light (for instance having a wavelength of between 487 nm and 566 nm). Other light ranges which may be of biological relevance or interest are possible, for example yellow light and blue light. It is also possible to use wavelengths apart from the visible light range, particularly in the infrared range or in the UV range.

The readout unit may be adapted to control the illumination unit to alternatingly excite the sample by irradiating the sample alternatingly with electromagnetic radiation pulses of at least two different intensity values. This may be done with electromagnetic radiation pulses having the same or different wavelengths and/or having the same or different polarization properties.

The readout unit may be adapted to control the illumination unit to alternatingly excite the sample by irradiating the sample alternatingly with electromagnetic radiation pulses of at least two different polarizations. This may be done with electromagnetic radiation pulses having the same or different wavelengths and/or having the same or different intensity values.

The apparatus may comprise a detector unit adapted for detecting electromagnetic radiation impinging on the detector unit in response to an illumination of the sample by the illumination unit. The detector may be a two-dimensional detector such as a CCD camera or a CMOS camera. However, it is also possible to use a zero-dimensional detector unit (for instance a single photodiode) or a one-dimensional detector unit (for instance a linear array of photodiodes or a line camera) which is then used to detect signals during scanning the sample in one or two lateral dimensions. Expansion to three-dimensional scanning is also possible. The detector may measure radiation in transmission geometry or in reflection geometry, and measure absorption characteristics, reflection characteristics, or fluorescence characteristics,

The scanning unit may be adapted to scan the sample two-dimensionally relative to the illumination unit (and/or to the detector unit). It may be appropriate that the illumination unit and/or the detector unit is/are spatially fixed, whereas the scanning unit moves the sample in one or two dimensions. This may allow to reduce the number of movable components to a minimum.

The apparatus may comprise a support or receptacle or carrier adapted for carrying a biosensor chip comprising the sample. Such a carrier may be optically transparent to thereby allow light to transmit the carrier material. Thus, illumination and detection may be performed on two different sides of the carrier. It is also possible, using deflection elements, to arrange illumination sources and detector on the same sides of the carrier.

The apparatus may be adapted as a Förster Resonance Energy Transfer (FRET) Apparatus. Such a concept for sensing molecular proximity is based on the energy transfer between a donor and an acceptor die. In other words, FRET describes an energy transfer mechanism between two chromophores.

Particularly, the apparatus may be adapted for acceptor photo bleaching. More particularly, the electromagnetic radiation source and the electromagnetic radiation detectors may be configured to form a Fluorescence Recovery After Photo bleaching (FRAP) arrangement. FRAP may be denoted as a life cell imaging technique using to study binding kinetics and/or the mobility of fluorescence molecules. A pulse of high intensity light may be used to photo bleach a population of fluorophores in a target region. Recovery of fluorescence in the bleached region represents movement of fluorophores into that region. In other words, FRAP may be denoted as a technique used in cellular imaging where a fluorochrome attached to a molecule may be destroyed intentionally with an intense flash of light (for instance by a laser). This may be performed in a well-defined area of the sample to study the repopulation of this area with peripheral molecules still fluorescent. This method may allow for a measurement of the speed of diffusion of molecules in living cells.

The apparatus may be adapted for single molecule detection. Thus, the accuracy of the apparatus is so high that it is possible to detect the presence or motion of individual molecules such as biological molecules like DNA, RNA, lipids, proteins or the like. It is also possible to identify individual molecules within a larger compound, for instance within a cell, for example by means of fluorescent portions of a molecule within the cell.

The system according to an exemplary embodiment discriminates regarding different excitation wavelengths. By corresponding modifications of the system (for instance the implementation of a polarizer or an OD (optical density) filter) it is possible to additionally or alternatively discriminate regarding polarization and/or intensity.

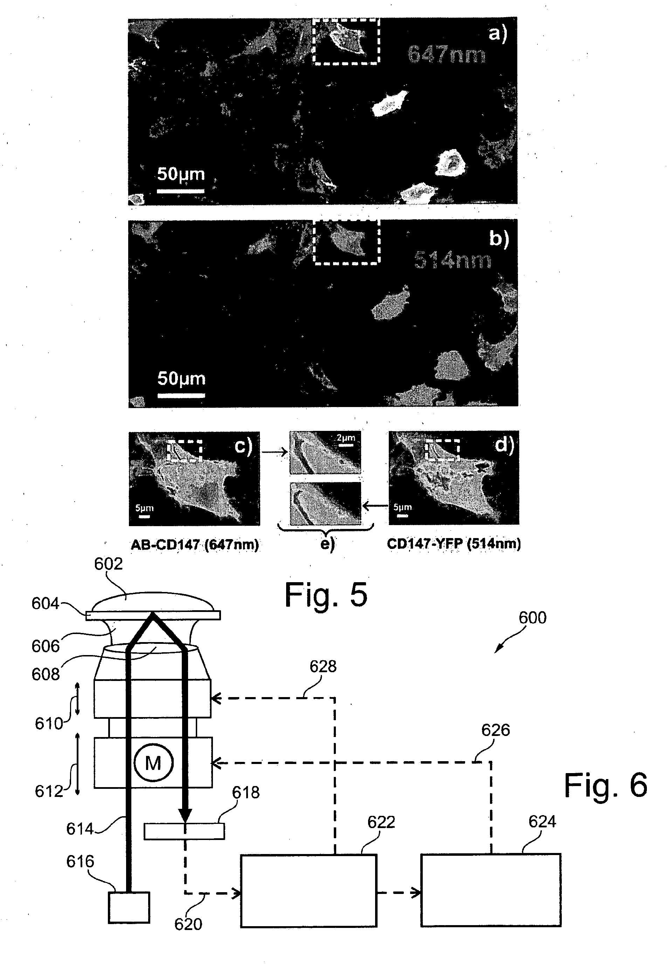

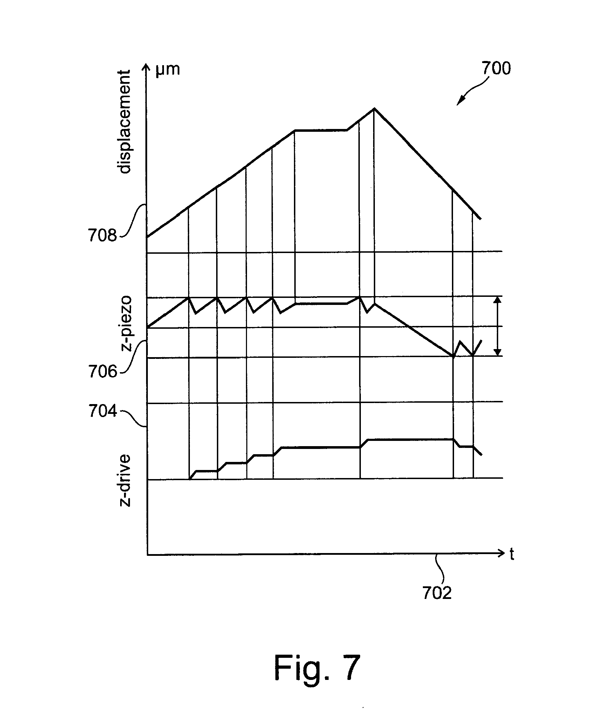

In the following, another aspect of the invention will be explained which may be denoted as a focus-hold system for a fluorescence-microscopy-based biochip scanner (see also Fig. 6 and Fig. 7). This aspect may be considered as a completely independent aspect, or may be combined with the above described aspects of the invention.

According to an embodiment of this aspect, a focus hold system for a scanner is provided, in particular a biochip scanner, the focus hold system comprising a determining unit adapted to determine a beam displacement of a light beam, in particular a totally reflected laser beam, a generation unit adapted to generate a control signal corresponding to the determined beam displacement, and an actuator, in particular a piezo driver and a (for instance stepper) motor, adapted to hold a focus based on the control signal. The use of a totally reflected beam is only one possible embodiment. In another embodiment, a simple light reflection at a transition between two media can be used. As an alternative to a laser, other light sources may be used as well.

According to a further embodiment of this aspect, the determination unit may comprise a photodiode, in particular a two segment photodiode.

According to a further embodiment of this aspect, the generation unit may be further adapted to convert a signal of the photodiode and to filter the converted signal.

According to a further embodiment of this aspect, the actuator may be adapted to actuate the focus hold system based on the control signal and a corresponding calibration curve.

According to a further embodiment of this aspect, the focus hold system may further comprise a discriminator unit, wherein the discriminator unit may adapted to determine whether a signal of the photodiode exceeds a predetermined threshold.

According to a further embodiment of this aspect, the discriminator unit may be adapted to generate a further control signal in case the signal of the photodiode exceeds the predetermined threshold.

According to a further embodiment of this aspect, the actuator may comprise a piezo driver and/or a motor drive.

According to a further embodiment of this aspect, the actuator may be adapted to generate a trapezoid velocity profile, in particular a velocity profile which has a maximum velocity value. The maximum value may be adjusted in a manner that a counter regulation by an analog piezo is enabled.

Embodiments of the mentioned aspect of the invention will be explained in the following in more detail.

The extension of conventional fluorescence microscopy to the scanning of extended samples (for instance having an area in the range of square millimeters to square centimeters, for instance biochips) may make it necessary to keep an adjusted focal plane constant with regard to a sample, even over large distances and long times (for instance several hours). Fluorescence scanners may involve focal problems.

Even when selecting components of the apparatus with due care, it may happen within the microscope that a number of artifacts occur which may result from the effect that the sample moves out of the focal plane. Corresponding effects can be a bending or curvature due to the mass of the glass on which the sample is provided. Adhesive forces of immersion oil may have a similar effect. A load effected by evaporating or injected buffer solution at a slide may have a similar effect. Furthermore, clamping forces may be present which may also contribute to the described system. The natural roughness of the surface may result in similar effects. A thermal extension of structural elements or a non-perpendicular alignment of an xy table with regard to a sample positioning may involve similar problems.

Corresponding errors or inaccuracies may occur with different time constants (from seconds or less, to hours or more) and with different amplitudes (from sub-micrometers or less, to millimeters or more).

According to the described aspect of the invention, a focus hold system may allow to rapidly and precisely regulate such errors. These two aspects may result in different requirements of a regulation circuit: A small error requires a high loop enhancement, but this reduces the border frequency, that is to say the regulator becomes slower and the oscillation tendency is increased.

In order to fulfill both requirements simultaneously, a two step focus hold system may be provided by an exemplary embodiment of the invention which has been implemented by the present inventor with success in the field of DNA chip scanning. The used samples may be glass slides of a dimension of, for instance, 76x26 mm$^2$, which can be read out with a single molecule sensitivity over an interval of five hours or more.

The occurrence of a change of the distance of the medium/glass relative to the objective may result in a beam distortion of the (for instance total reflected) light (for instance laser) beam on a two segment photodiode. An error proportional current signal may be converted in a voltage, may be filtered and may be supplied to a PID (Proportional Integrated Differential) regulator. The PID regulator may control, via a characteristic curve adjustable to a respective experiment, a piezo driver which can carry out fast analog corrections in the kHz domain.

Simultaneously, a window discriminator may monitor the error signal and may carry out a slow stepwise raw correction of the piezo zero position via a z-drive integrated in the microscope, when an adjustable threshold value is exceeded. The z-drive may be a motorized z-drive, which may be integrated for instance in the microscope. However, the z-drive may also be mechanical coupled to the manual drive. The motion may be carried out using a trapezoidal velocity profile and with a maximum rate limited in such a manner that the piezo can be counter-regulated simultaneously, to thereby maintain the sample in the focus. For a stable and safe drive of the z-drive, it may still be necessary or advantageous to perform region monitoring which can also be integrated in this stage. Also a debouncing feature can be implemented.

Therefore, according to the described aspect, a focus hold system for the lateral scanning of large areas using a microscope objective by means of a two step regulation may be provided.

Such a focus hold system may be not very prone to perform undesired oscillations in the case of a horizontal scanning by a two-step regulation. A mechanical actuator as well as a piezo regulator may be used which can have the following advantages and other as compared to conventional systems:

- Accuracy or resolution may be better than 100 nm
- Even scanning of large curved samples with a high topography of e.g. 10 mm or more over areas of 10 cm x 10 cm may be possible
- Use of total reflection of the exciting beam (regulation via two segment detector) may be possible
- Greatly reduced sensibility for oscillations
- Fast correction of distortions

Thus, a system is described, for instance, in WO 2006/066286 may be significantly improved by implementing the described two step regulation.

The aspects defined above and further aspects of the invention are apparent from the examples of embodiment to be described hereinafter and are explained with reference to these examples of embodiment.

The invention will be described in more detail hereinafter with reference to examples of embodiment but to which the invention is not limited.

Fig. 1 and Fig. 2 show apparatuses for single particle detection according to exemplary embodiments of the invention.

Fig. 3 illustrates alternating excitation scanning of surface immobilized beads captured using an apparatus according to an exemplary embodiment of the invention.

Fig. 4 illustrates alternating excitation scanning of mobile fluorescence streptavidin captured using an apparatus according to an exemplary embodiment of the invention.

Fig. 5 illustrates alternating excitation scanning of fluorescence labeled cells captured using an apparatus according to an exemplary embodiment of the invention.

Fig. 6 illustrates a focus hold system according to another aspect of the invention.

Fig. 7 illustrates a time dependency of different spatial parameters of the system of Fig. 6.

The illustration in the drawing is schematically. In different drawings, similar or identical elements are provided with the same reference signs.

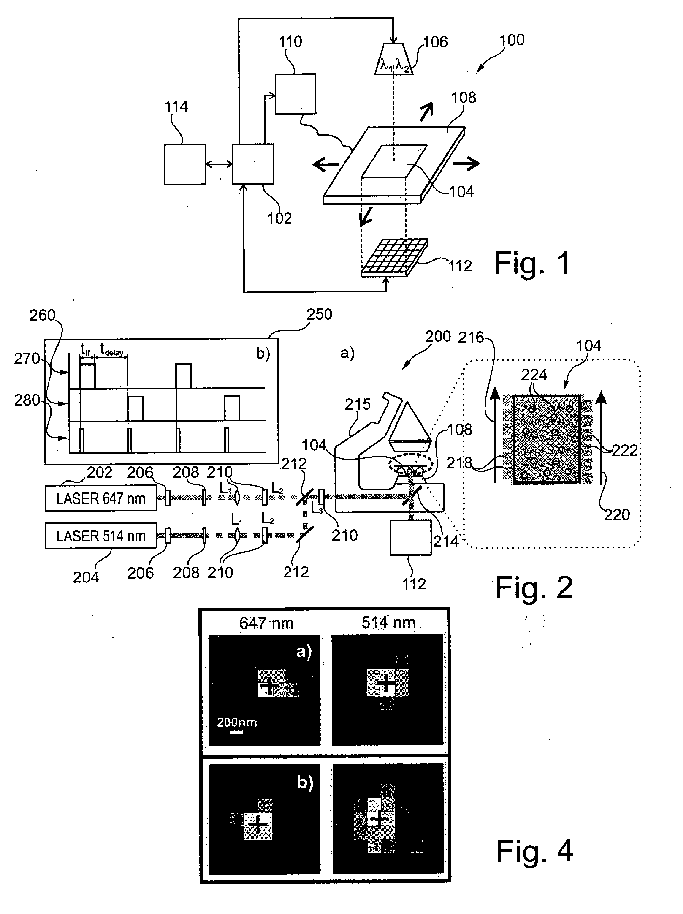

**Fig. 1** shows an apparatus 100 for single particle detection according to an exemplary embodiment of the invention.

The apparatus 100 comprises a readout unit 102 which can also be denoted as a control unit (for instance a CPU, central processing unit, or a microprocessor). The readout unit 102 is adapted for controlling the entire operation of the apparatus 100 and is particularly adapted to use alternating excitation schemes for excitation of particles of the sample 104 to obtain, essentially at the same time, two complementary pieces of information regarding the sample 104, thereby broadening the basis of information based on which an evaluation of the experiment can be carried out.

The apparatus 100 comprises an illumination unit 106 which is in the present embodiment a laser capable of emitting two different wavelengths, namely $\lambda_1$ and $\lambda_2$. Furthermore, an xy table 108 on which the sample 104 is mounted can be moved in a two-dimensional manner as indicated schematically by arrows. An xy motor 110 drives the xy table 108.

The illumination unit 106 is arranged to illuminate the sample 104 mounted on the carrier 108. The scanning unit 110 is adapted to scan the sample or two portions of the sample 104 to capture two images thereof, in particularly of the same region of the sample 104. The two images may be quasi-simultaneously recorded images, i.e. two samples captured with a time distance which is sufficiently short as compared with motion times of components of the sample 104. For example, a time interval between subsequently captured images may be 5 ms.

The readout unit 102 may be adapted to control the illumination unit 106 to alternatively excite the sample 104 by irradiating the sample 104 alternatingly with light pulses of the two different wavelengths $\lambda_1$ and $\lambda_2$ which may differ by more than 100 nm to thereby to activate different fluorescence responses of the sample 104.

A CCD detector 112 is provided to detect light or electromagnetic radiation of other wavelength regions (for instance UV light or infrared light) impinging on the detector pixels of the CCD detector 112 in response to an illumination of the sample 104 by the two wavelengths laser unit 106.

The scanning unit 110 may move the carrier 108 two-dimensionally and relative to the spatially fixed illumination unit 106 (also the detector 112 is spatially fixed), to thereby obtain an image of the surface of the sample 104.

The readout unit 102 is further bidirectionally coupled with an input/output unit 114 which is a user interface. The input/output unit 114 may comprise input elements such as a keypad, buttons, a joystick or the like to enable a user to supply the system 100 with control commands for defining the experiment to be carried out by the apparatus 100. Furthermore, the input/output unit 114 may comprise an output unit such as a display, for example a liquid crystal display by means of which the result of the experiment carried out by the apparatus 100 may be indicated to a user.

In the following, referring to **Fig. 2,** an apparatus 200 for detecting individual cells according to an exemplary embodiment of the invention will be explained.

The apparatus 200 (see Fig. 2a) comprises a first laser 202 adapted for illuminating a sample 104 with light of a first wavelength of 647 nm (red light). Furthermore, a second laser 204 is provided adapted for illuminating the sample 104 with green light (wavelength 514 nm).

A respective shutter 206 is assigned to each one of the lasers 202, 204 to selectively enable or disable an illumination of the sample 104. An acoustic optic modulator (AOM) 208 is provided for each of the laser beams 202, 204 which can be a member that varies amplitude and/or phase of a light beam of the respective laser 202, 204 to control the illumination properties of the sample 104. A plurality of lenses 210 are provided in each of the beam paths. Dichroic mirrors 212 may direct light from the two lasers 202, 204 towards the same portion of the sample. A further dichroic mirror 214 is located close to an epimicroscope 216. At the epimicroscope 215, the sample 104 is mounted on an xy stage 108.

The detailed view of the sample 104 on the right-hand of Fig. 2 shows the sample 104 moving over an objective. A red scan line 216 is shown yielding red (strip-based) images 218. Furthermore, a green scan line 220 is shown yielding green (strip-based) images 222. On the images 218, 222, the individual molecules 224 can be identified. The images 218, 222 are captured by the line camera 112 which is a CCD camera in the present embodiment.

More precisely, the capturing of the strips 218, 222 may take a time of, for instance, seconds to minutes. During scanning for imaging a stripe 218, 222, the system 200 switches between red and green by alternatingly activating the lasers 202, 204. This switching may be significantly faster than the switching from one stripe pair 218, 222 to the parallel next stripe pair 218, 222 so that the capturing of each pixel can be performed in red and in green essentially simultaneously so that the results are directly comparable. By capturing a sequence of stripes 218, 222, a large two-dimensional image of the sample 104 can be derived in two (or more) color channels.

In a box 250 (see Fig. 2b), an illumination and detecting sequence can be seen according to which the lasers 202, 204 illuminate the sample 104 and according to which the detector 112 detects the images 218, 222. A first diagram 260 shows the ON and OFF times of the acoustic optic modulator 208 related to the red laser 202. On a second diagram 270, the operation of the acoustic optic modulator 208 assigned to the green laser 204 is shown. The capturing times of the camera 112 can be taken from a third diagram 280. Thus, both excitation and detection can be performed in a pulsed manner.

In the following, materials and methods will be explained which may be implemented in the apparatus 200 according to an exemplary embodiment of the invention.

To ensure flexibility, the reader system 200 may be set up on a conventional inverted epifluorescence microscope 215 (Axiovert 200M, Zeiss, Germany). Samples 104 may be mounted on a high precision scanning stage 108 (SCAN IM, 120x100, Märzhäuser, Germany) and illuminated through the epi-port of the microscope 215 by 514nm and 647nm laser light from an $Ar^+$-and $Kr^+$-Laser 202, 204 (I-306, I-301; Coherent, USA), respectively. Precise illumination timings may be set by acousto-optic modulators 208 (AOMs; 1205C-2/232A-1, Isomet, USA). Fluorescence signals may be collected using an oil immersion objective (Plan-Apochromat, 100x/NA=1.4, Zeiss, Germany) and imaged on a back-illuminated CCD camera 112 (NTE/CCD-1340/100-EMB, QE≥85%, pixel size: $20\mu m$, Roper Scientific, USA). Residual Rayleigh and Raman scattered light may be effectively blocked using standard 2-color filter sets (for instance Chroma Z520/647RPC & Z514/647M for Cy3/Cy5, USA). Illumination timing protocols may be generated on a standard personal computer with a LabView-program (National Instruments, USA) and output through an analog/digital IO-card (PCI-6713, National Instruments, USA) to control the AOMs 208 and to trigger the camera 112.

Fig. 2 thus shows the optical paths for the individual colors. Precise excitation timings may be achieved using AOMs 208 for each color. For shaping of elliptical beam profiles, a combination of two cylindrical lenses 210 (L2: f=50mm, L3: f=300mm) mounted in perpendicular direction and one spherical lens 210 (L1: f=22mm) may be used. The timing protocol (see Fig. 2b) shows the sequence of interlaced control and trigger signals for the alternating excitation scheme. The control signals 260, 270 for the AOMs 208 define the illumination time for each line ($t_{ill}$), while the camera trigger 280 starts the preprogrammed acquisition process on the camera 112. The delay between two consecutive illuminations, $t_{delay}$, is limited by the readout rate of the camera 112. For display, the obtained line recordings are finally assembled into two images 218, 222 corresponding to the two color channels.

The sample 104 may be continuously shifted through a narrow illumination stripe with a Gaussian intensity profile of $2\mu m$ full width at half maximum (FWHM) in scanning direction; in the perpendicular direction, the beam may be defocused such that intensity variations were less than 25%. A field-stop may be introduced in order to restrict the excitation to the field of view imaged on the chip, thereby preventing photobleaching of adjacent areas during a scan. An excitation power of ~$11kW/cm^2$ (647nm) and ~$8.8kW/cm^2$ (514nm) may be applied (maximum of the Gaussian profile). The collected fluorescence may be continuously read-out on a line-camera 112. For convenience, a conventional CCD camera 112 may be used, and the virtual chip size may be reduced to one line.

Interlaced pulse trains for red and green illumination control the AOMs 208 and may be used as camera triggers, as shown in the timing protocol (Fig. 2b). Illumination times $t_{ill}$=1-3ms and a delay time $t_{delay}$=6.6ms may be used, for example. The delay can be arbitrarily adjusted down to the limit set by the readout time of the camera 112 and cleaning overheads. Here, the system may be operated at maximum speed. For display and further processing, the individual lines may be finally assembled into two images 218, 222 corresponding to the two excitation colors.

Next, results obtained with an apparatus according to an exemplary embodiment will be discussed.

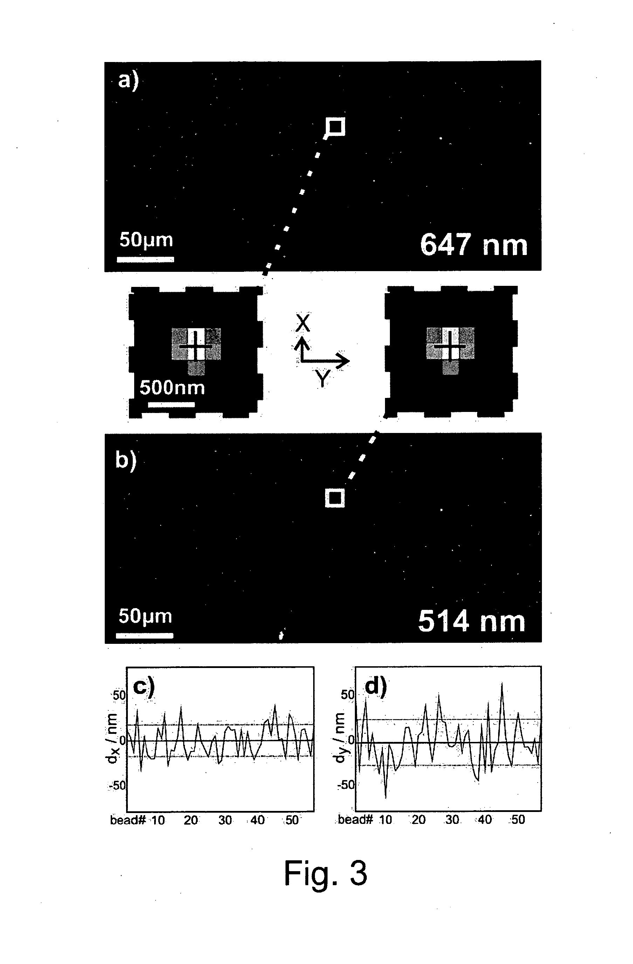

First, the proper functioning of the method by scanning a surface containing immobilized fluorescent latex spheres (100nm Tetraspeck Multi Spectral Beads, Invitrogen, USA) will be shown, see Fig. 3.

**Fig. 3** shows the result of an alternating excitation scanning of surface-immobilized beads.

100nm multispectral beads were immobilized on a glass coverslip and scanned with the described setup. Fig. 3a and Fig. 3b show scans of $400\mu m$ x $200\mu m$ sample area. Individual peaks corresponding to single beads can be easily resolved in both color channels recorded at 514nm (a) and 647nm (b) excitation, as exemplified in the zooms of one particular bead. 58 individual peaks were analyzed by fitting with a Gaussian profile, revealing information about the overall brightness, width and the position of the beads. Fig. 3c and Fig. 3d show an analysis of the distance differences $\vec{d} = (d_x, d_y)$ between the two color channels for each bead (y is defined here as scanning direction). From the distance fluctuations, a localization precision $\sqrt{\text{var}(r_x)} = 9nm$ and $\sqrt{\text{var}(r_y)} = 13nm$ is calculated.

Individual beads were well resolved as single fluorescence peaks. These were analyzed by fitting with a Gaussian profile, yielding the bead position F, the brightness, and the width of the signal profile parallel $\sigma_\parallel$ and perpendicular $\sigma_\perp$ to the scanning direction. The latter is a signature of the quality of the imaging process. Excentricity of the signal profiles due to imperfect synchronization of stage movement and camera readout was not observed ($\sigma_\perp/\sigma_\parallel$=0.98). An average width of 380nm (FWHM) was measured in both color channels (15nm standard deviation, 58 data points), which is consistent with the point-spread function of 450nm and 360nm (FWHM) measured for 30nm latex spheres (Hesse et al., 2004).

As indicated in the magnifications, single beads were imaged virtually at the same position in the red and green channel. The calculated relative positions $\vec{d_l} = (\vec{r}_{red} - \vec{r}_{green})$ showed variations on a subpixel length scale, which can be attributed to errors in localization precision ("extrinsic noise") and to differences in the dye distribution within the bead ("intrinsic noise"). The extrinsic noise can be measured independently by analyzing $\vec{d} = (\vec{r}_{red} - \vec{r}_{green})_I - (\vec{r}_{red} - \vec{r}_{green})_{II}$ obtained in two consecutive scans I and II over the same chip region (Fig. 3c and Fig. 3d). Its variance var($\vec{d}$) is determined by the localization precision along the individual coordinates x (perpendicular to the scanning direction) and y (along the scanning direction) according to var($d_x$) = 4var($r_x$), yielding $\sqrt{\mathrm{var}(r_x)} = 9nm$ and $\sqrt{\mathrm{var}(r_y)} = 13nm$. These results are higher than theoretical predictions for stationary Gaussian-shaped point emitters of 1.9nm

$$\left\langle \left( \Delta x \right)^2 \right\rangle = \frac{s^2 + a^2/12}{N} + \frac{8\pi s^4 b^2}{a^2 N^2} = 3.75nm^2 \text{ ,}$$ assuming a=200nm, s=170nm, N=10.000 and b=10 in [Eq. 17 in (Thompson et al., 2002)]). The discrepancy can be attributed to residual fluctuations in stage movement, which yield additional deviations in particular in scanning direction. Yet, localization errors are ~20 times smaller than the resolution limit of the imaging system, and can therefore be neglected in most applications. The physical distance of the centroids of the two colors within single beads δ can be estimated from var($d_I$) = 0.5 var($d$) + var($δ$), yielding $\sqrt{\mathrm{var}(\delta_x)} \approx 50nm$ and $\sqrt{\mathrm{var}(\delta y)} \approx 60nm$. Apparently, the dye load is distributed highly unequally over the 100nm sphere.

To show the feasibility of the device for two-color imaging of single mobile molecules, individual fluorescent streptavidin molecules anchored to a fluid lipid bilayer were recorded. Supported lipid bilayers of mixtures of 1-palmitoyl-2-oleoyl-sn-glycero-3-phosphocholin (POPC, Avanti Polar Lipids, USA) and N-biotinoyl-1,2-dihexadecanoylsn-glycero-3-phosphoethanolamine (Biotin-DHPE, Biotrend, Germany) at a molar ratio of 10-4 were prepared on glass coverslips through self-assembly from vesicle solution (Kalb et al., 1992), yielding typical diffusion constants D~1.4$\mu$m$^2$/s (Moertelmaier et al., 2005). Streptavidin double-labeled with Cy3 and Cy5 (GE Healthcare, USA) were used as probe; spectrometric analysis revealed a dye to protein ratio of 0.1 for Cy5 and 4.8 for Cy3. The bilayer was incubated for 10 minutes with 25nM fluorescent streptavidin, and subsequently washed extensively in Phosphate Buffered Saline (Dulbecco's PBS, Paa, Austria), yielding a surface density of less than 1 streptavidin molecule per $\mu$m$^2$. The low dye-load in the red channel ensured that the majority of observed streptavidin molecules was labeled with only one Cy5 molecule. As expected for the chosen parameter settings, single molecules can be clearly resolved (see Fig. 4).

**Fig. 4** illustrates alternating excitation scanning of mobile fluorescent streptavidin.

Streptavidin was labeled with Cy3 and Cy5 and bound to a fluid POPC bilayer doped with Biotin-DHPE. Rows a) and b) of Fig. 4 show a single streptavidin molecule in the two excitation channels, which was fitted by a Gaussian function, yielding its position (indicated by black cross). Even for these rapidly diffusing molecules the average virtual distance of the peaks recorded in the two color channels was only 80nm (140nm) in x (y) direction, which is a consequence of the interlaced excitation scheme.

The total mean brightness of a single peak of 490 counts compares well with previous measurements on single Cy5 molecules (Hesse et al., 2004). It is apparent, however, that imaging of mobile objects leads to distortions in the peak profile. Two adjacent lines are recorded with a repetition time of $t_{rep}$ = 2($t_{ill}$ + $t_{delay}$) ≈ 20ms, yielding a typical line-to-line shift of $\sqrt{4Dt_{rep}} \approx 330nm$. This affects the signal shape in the final image along both coordinates: movement perpendicular to the scanning axis yields a chopped signature of the peak, with displaced signal profiles along the lines, movement along the scanning axis may increase or reduce the peak width. Still, since a single peak covers multiple lines, the random diffusion process leads to the rather circular peak shape observed in Fig. 4. Next, the red and green excitation images of single streptavidin molecules were compared by determining the mean squared distance of the respective peaks, yielding 80nm and 140nm in x and y-direction, respectively. These values are remarkably smaller than the expected distance a molecule travels during its effective recording time $t_{rec}$ = 2($t_{ill}$ + $t_{delay}$)N, which can be approximated by $\sqrt{2Dt_{rec}} \approx 400nm$ (N~3 the number of lines contributing to the peak). The reduced distance is a consequence of the interlaced recording scheme for the two colors, which renders the single molecule paths not independent between the red and green illumination. The scenario is equivalent to imaging a trajectory fragmented into N segments, with adjacent fragments alternately assigned to two images. When comparing the average positions on each image, the distance scales approximately with N-2, as confirmed by Monte Carlo simulations (not shown). The apparent simultaneity can therefore be improved by reducing the pixel size or increasing $t_{rec}$, however, at the expense of reduced signal brightness or distorted signal profiles, respectively.

The applicability of the methodology to live cell imaging has also been demonstrated, see Fig. 5.

**Fig. 5** shows alternating excitation scanning of fluorescence labeled cells.

CHO cells were transfected with EYFP-CD147 and labeled with Alexa 647-Fab to CD147. The two color channels of the scan (400$\mu$m x 200$\mu$m) are shown in Fig. 5a and Fig. 5c for 647nm excitation, and Fig. 5b and Fig. 5d for 514nm excitation. In the zooms, clear colocalization of the EYFP-CD147 and its specific antibody is visible (for better visibility, the color map was changed in the magnifications).

For this, CHO-K1 cells transfected with EYFP-CD147 were used. The fusion construct was localized in the plasma membrane and in vesicles, which were transported actively through the cytosol. Cells were co-stained with a Fab-fragment of a CD147 antibody (MEM 6/1) fluorescently labeled with AlexaFluor 647 (Molecular Probes, USA). The details show the expected colocalization of the two color channels, thereby demonstrating the interaction of the red-labeled antibody with its green-labeled receptor. This proof-of principle experiment indicates the feasibility of the presented screening approach for detecting molecular colocalization in a live cell context. In particular, the quasi simultaneous imaging approach allows for singling out rare events - for instance the formation of cell-cell contacts -, which are difficult to follow in conventional two-color microscopy.

The described system represents a valuable extension to multi-color microscopy on biological samples. It provides imaging equivalent of flow cytometry: while multiple wavelength imaging in emission is well established, the implementation of quasi-simultaneous two-color imaging in excitation is provided according to an exemplary embodiment of the invention. Further extension to even more excitation wavelengths, and combination with discrete emission channels for a multi-parameter screening platform is made possible.

In the following, another aspect of the invention will be explained with may or may not be combined with or implemented in a system as show in Fig. 1 or Fig. 2

**Fig. 6** shows an apparatus 600 as an example for a focus hold system according to another exemplary embodiment of the invention.

Fig. 6 shows a medium 602 (such as a sample) on a glass slide 604 (for instance a sample carrier). An immersion oil structure is denoted with reference numeral 606. An objective lens 608 is provided to transport an image via a z-piezo drive 610 and a motor z-drive 612.

A laser beam 614 generated by a laser source 616 is directed to the medium 602, is reflected there and is supplied to a two segment photodiode 618. The two segment photodiode 618 supplies an error signal 620 to a signal conditioner and PID (Proportional Integrated Differential) controller 622 which in turn forwards a control signal to a window discriminator and debouncer 624. A step correction signal 626 is supplied to the motor z-drive 612, and the signal conditioner and PID controller 622 supplies an analog correction signal 628 to the z-piezo drive 610.

The occurrence of a change of the distance of the medium 602/glass 604 relative to the objective 608 may result in a beam distortion of the total reflected laser beam on the two segment photodiode 618. An error proportional current signal may be converted in a voltage, may be filtered and may be supplied to the PID regulator 622. The PID regulator 622 may control the piezo drive 610 which can carry out fast analog corrections in the kHz (for instance corresponding to microseconds) domain.

Simultaneously, the window discriminator 624 may monitor the error signal and may carry out a slow stepwise raw correction of the piezo zero position via the z-drive 612 integrated in the microscope, when an adjustable threshold value is exceeded. The motion may be carried out using a trapezoidal velocity profile and with a maximum rate limited in such a manner that the piezo 610 can be counter-regulated simultaneously, to thereby maintain the sample 602 in the focus. For a stable and safe drive of the z-drive 612, it may still be necessary or advantageous to perform region monitoring which can also be integrated in this stage.

**Fig. 7** shows a diagram 700 describing the operation of the device 600. Along an abscissa 702 the time is plotted. Along a first ordinate 704, the operation of the z-drive 612 is shown. Along a second ordinate 706, operation of the z-piezo 610 is shown. Along a third coordinate 708, the displacement is shown in micrometers.

It should be noted that the term "comprising" does not exclude other elements or features and the "a" or "an" does not exclude a plurality. Also elements described in association with different embodiments may be combined.

It should also be noted that reference signs in the claims shall not be construed as limiting the scope of the claims.

CITED REFERENCES

Cai, L., Friedman, N. & Xie, X. S., 2006. Nature 440, 358-62.

Heise, B., Sonnleitner, A. & Klement, E. P., 2005. Microsc Res Tech 66, 312-20.

Heller, M. J., 2002. Annu Rev Biomed Eng 4, 129-53.

Hesse, J., Jacak, J., Kasper, M., Regl, G., Eichberger, T., Winklmayr, M., Aberger, F., Sonnleitner, M., Schlapak, R., Howorka, S., Muresan, L., Frischauf, A. M. & Schutz, G. J., 2006. Genome Res 16, 1041-5.

Hesse, J., Sonnleitner, M., Sonnleitner, A., Freudenthaler, G., Jacak, J., Hoglinger, O., Schindler, H. & Schutz, G. J., 2004. Anal Chem 76, 5960-4.

Huh, W. K., Falvo, J. V., Gerke, L. C., Carroll, A. S., Howson, R. W., Weissman, J. S. & O'Shea, E. K., 2003. Nature 425, 686-91.

Kalb, E., Frey, S. & Tamm, L. K., 1992. Biochim Biophys Acta 1103, 307-16.

Kapanidis, A. N., Lee, N. K., Laurence, T. A., Doose, S., Margeat, E. & Weiss, S., 2004. Proc Natl Acad Sci U S A.

Kapanidis, A. N., Margeat, E., Ho, S. O., Kortkhonjia, E., Weiss, S. & Ebright, R. H., 2006. Science 314, 1144-7.

Kenworthy, A. K., Nichols, B. J., Remmert, C. L., Hendrix, G. M., Kumar, M., Zimmerberg, J. & Lippincott-Schwartz, J., 2004. J Cell Biol 165, 735-46.

Kural, C., Kim, H., Syed, S., Goshima, G., Gelfand, V. I. & Selvin, P. R., 2005. Science 308, 1469-72.

Lee, N. K., Kapanidis, A. N., Koh, H. R., Korlann, Y., Ho, S. O., Kim, Y., Gassman, N., Kim, S. K. & Weiss, S., 2007. Biophys J 92, 303-12.

Mir, K. U., 2006. Genome Res 16, 1195-7.

Moertelmaier, M., Brameshuber, M., Linimeier, M., Schütz, G. J. & Stockinger, H., 2005. Appl Phys Lett 87, 263903.

Moertelmaier, M. A., Kögler, E. J., Hesse, J., Sonnleitner, M., Huber, L. A. & Schütz, G. J., 2002. Single Mol. 3, 225-231.

Muller, B. K., Zaychikov, E., Brauchle, C. & Lamb, D. C., 2005. Biophys J 89, 3508-22.

Ross, J., Buschkamp, P., Fetting, D., Donnermeyer, A., Roth, C. M. & Tinnefeld, P., 2007. J Phys Chem B 111, 321-6.

Sauter, G., Simon, R. & Hillan, K., 2003. Nat Rev Drug Discov 2, 962-72.

Teruel, M. N. & Meyer, T., 2002. Science 295, 1910-2.

Thompson, R. E., Larson, D. R. & Webb, W. W., 2002. Biophys J 82, 2775-83. Wieser, S., Moertelmaier, M., Fuertbauer, E., Stockinger, H. & Schutz, G. J., 2007. Biophys J 92, 3719-28.

Yu, J., Xiao, J., Ren, X., Lao, K. & Xie, X. S., 2006. Science 311, 1600-3.

Zhu, J., Shendure, J., Mitra, R. D. & Church, G. M., 2003. Science 301, 836-8.

**Claims**

1. An apparatus for single particle detection, the apparatus comprising:

   a readout unit adapted to use alternating excitation schemes;
   an illumination unit adapted to illuminate a sample; and
   a scanning unit adapted to scan two images of the sample, in particular of the same region of the sample;
   wherein the two images are quasi-simultaneously recorded images.

2. The apparatus according to claim 1,
   wherein the two images are recorded with a local time difference of less than 20 ms, particularly of less than 10 ms, more particularly of less than 3 ms.

3. The apparatus according to claim 1 or 2,
   wherein the readout unit is adapted to control the illumination unit to alternatingly excite the sample by irradiating the sample alternatingly with electromagnetic radiation pulses of at least two different wavelengths.

4. The apparatus according to claim 3,
   wherein the different wavelengths are selected from at least one of the group consisting of the visible light range, the infrared range, and the ultraviolet range.

5. The apparatus according to any one of claims 1 to 4,
   wherein the readout unit is adapted to control the illumination unit to alternatingly excite the sample by irradiating the sample alternatingly with electromagnetic radiation pulses of at least two different intensity values.

6. The apparatus according to any one of claims 1 to 5,
   wherein the readout unit is adapted to control the illumination unit to alternatingly excite the sample by irradiating the sample alternatingly with electromagnetic radiation pulses of at least two different polarizations.

7. The apparatus according to any one of claims 1 to 6,
   comprising a detector unit adapted for detecting electromagnetic radiation impinging on the detector unit in response to an illumination of the sample by the illumination unit.

8. The apparatus according to any one of claims 1 to 7,

wherein the scanning unit is adapted to scan the sample two-dimensionally relative to the illumination unit.

9. The apparatus according to any one of claims 1 to 8,
comprising a carrier adapted for carrying a substrate comprising a sample.

10. The apparatus according to any one of claims 1 to 9,
adapted for at least one of the group consisting of Förster Resonance Energy Transfer, for acceptor photo bleaching, for single molecule detection, for live cell imaging, for colocalization of two or more fluorophores which differ in their absorption spectrum, for discrimination of specific fluorescence from background fluorescence such as cellular autofluorescence, for increasing the dynamic range, and for determining the in-plane dipole orientation.

11. The apparatus according to any one of claims 1 to 10,
wherein the readout unit is adapted to use the alternating excitation schemes for excitation of a particle of the sample to be detected alternatingly by a first excitation mode and by a second excitation mode.

12. The apparatus according to any one of claims 1 to 11,
comprising a focus hold system for maintaining a sample in an appropriate relation with regard to the readout unit to enable the readout unit for single particle detection in the sample.

13. A method of detecting single particles, the method comprising:

illuminating a sample;
recording two images by scanning the sample, in particular of the same region of the sample;
using alternating excitation schemes for reading out a result of the detection.

14. A computer-readable medium, in which a computer program for detecting single particles is stored, which computer program, when being executed by a processor, is adapted to carry out or control a method according to claim 13.

15. A program element for detecting single particles, which program element, when being executed by a processor, is adapted to carry out or control a method according to claim 13.

16. A method of using an apparatus according to any one of claims 1 to 12 for life cell imaging.

**Fig. 1**

**Fig. 2**

**Fig. 4**

Fig. 3

**AB-CD147 (647nm)**　　**e)**　　**CD147-YFP (514nm)**

## Fig. 5

## Fig. 6

Fig. 7

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 60989828 B

- WO 2006066286 A

**Non-patent literature cited in the description**

- **CAI, L. ; FRIEDMAN, N. ; XIE, X. S.** *Nature,* 2006, vol. 440, 358-62
- **HEISE, B. ; SONNLEITNER, A. ; KLEMENT, E. P.** *Microsc Res Tech,* 2005, vol. 66, 312-20
- **HELLER, M. J.** *Annu Rev Biomed Eng,* 2002, vol. 4, 129-53
- **HESSE, J. ; JACAK, J. ; KASPER, M. ; REGL, G. ; EICHBERGER, T. ; WINKLMAYR, M. ; ABERGER, F. ; SONNLEITNER, M. ; SCHLAPAK, R. ; HOWORKA, S.** *Genome Res,* 2006, vol. 16, 1041-5
- **HESSE, J. ; SONNLEITNER, M. ; SONNLEITNER, A. ; FREUDENTHALER, G. ; JACAK, J. ; HOGLINGER, O. ; SCHINDLER, H. ; SCHUTZ, G. J.** *Anal Chem,* 2004, vol. 76, 5960-4
- **HUH, W. K. ; FALVO, J. V. ; GERKE, L. C. ; CARROLL, A. S. ; HOWSON, R. W. ; WEISSMAN, J. S. ; O'SHEA, E. K.** *Nature,* 2003, vol. 425, 686-91
- **KALB, E. ; FREY, S. ; TAMM, L. K.** *Biochim Biophys Acta,* 1992, vol. 1103, 307-16
- **KAPANIDIS, A. N. ; LEE, N. K. ; LAURENCE, T. A. ; DOOSE, S. ; MARGEAT, E. ; WEISS, S.** *Proc Natl Acad Sci U S A,* 2004
- **KAPANIDIS, A. N. ; MARGEAT, E. ; HO, S. O. ; KORTKHONJIA, E. ; WEISS, S. ; EBRIGHT, R. H.** *Science,* 2006, vol. 314, 1144-7
- **KENWORTHY, A. K. ; NICHOLS, B. J. ; REMMERT, C. L. ; HENDRIX, G. M. ; KUMAR, M. ; ZIMMERBERG, J. ; LIPPINCOTT-SCHWARTZ, J.** *J Cell Biol,* 2004, vol. 165, 735-46
- **KURAL, C. ; KIM, H. ; SYED, S. ; GOSHIMA, G. ; GELFAND, V. I. ; SELVIN, P. R.** *Science,* 2005, vol. 308, 1469-72

- **LEE, N. K. ; KAPANIDIS, A. N. ; KOH, H. R. ; KORLANN, Y. ; HO, S. O. ; KIM, Y. ; GASSMAN, N. ; KIM, S. K. ; WEISS, S.** *Biophys J,* 2007, vol. 92, 303-12
- **MIR, K. U.** *Genome Res,* 2006, vol. 16, 1195-7
- **MOERTELMAIER, M. ; BRAMESHUBER, M. ; LINIMEIER, M. ; SCHÜTZ, G. J. ; STOCKINGER, H.** *Appl Phys Lett,* 2005, vol. 87, 263903
- **MOERTELMAIER, M. A. ; KÖGLER, E. J. ; HESSE, J. ; SONNLEITNER, M. ; HUBER, L. A. ; SCHÜTZ, G. J.** *Single Mol.,* 2002, vol. 3, 225-231
- **MULLER, B. K. ; ZAYCHIKOV, E. ; BRAUCHLE, C. ; LAMB, D. C.** *Biophys J,* 2005, vol. 89, 3508-22
- **ROSS, J. ; BUSCHKAMP, P. ; FETTING, D. ; DONNERMEYER, A. ; ROTH, C. M. ; TINNEFELD, P.** *J Phys Chem B,* 2007, vol. 111, 321-6
- **SAUTER, G. ; SIMON, R. ; HILLAN, K.** *Nat Rev Drug Discov,* 2003, vol. 2, 962-72
- **TERUEL, M. N. ; MEYER, T.** *Science,* 2002, vol. 295, 1910-2
- **THOMPSON, R. E. ; LARSON, D. R. ; WEBB, W. W.** *Biophys J,* 2002, vol. 82, 2775-83
- **WIESER, S. ; MOERTELMAIER, M. ; FUERTBAUER, E. ; STOCKINGER, H. ; SCHUTZ, G. J.** *Biophys J,* 2007, vol. 92, 3719-28
- **YU, J. ; XIAO, J. ; REN, X. ; LAO, K. ; XIE, X. S.** *Science,* 2006, vol. 311, 1600-3
- **ZHU, J. ; SHENDURE, J. ; MITRA, R. D. ; CHURCH, G. M.** *Science,* 2003, vol. 301, 836-8